(19) Europäisches Patentamt
European Patent Office
Office européen des brevets

(11) **EP 2 844 498 B1**

(12) **FASCICULE DE BREVET EUROPEEN**

(45) Date de publication et mention
de la délivrance du brevet:
**04.10.2017 Bulletin 2017/40**

(21) Numéro de dépôt: **13719838.8**

(22) Date de dépôt: **30.04.2013**

(51) Int Cl.:
**B60B 19/00** (2006.01)     **B60B 19/12** (2006.01)
**B60B 19/04** (2006.01)     **B60B 19/14** (2006.01)
**B60B 33/00** (2006.01)

(86) Numéro de dépôt international:
**PCT/EP2013/058949**

(87) Numéro de publication internationale:
**WO 2013/164327 (07.11.2013 Gazette 2013/45)**

(54) **ROUE SPHÉRIQUE ET VÉHICULE METTANT EN OEUVRE LA ROUE**

KUGELFÖRMIGES RAD UND FAHRZEUG MIT DIESEM RAD

SPHERICAL WHEEL, AND VEHICLE IMPLEMENTING THE WHEEL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.04.2012 FR 1253981**

(43) Date de publication de la demande:
**11.03.2015 Bulletin 2015/11**

(73) Titulaire: **Aldebaran Robotics
75015 Paris (FR)**

(72) Inventeurs:
• **CLERC, Vincent
  F-92140 Clamart (FR)**
• **MAISONNIER, Bruno
  F-75018 Paris (FR)**

(74) Mandataire: **Collet, Alain
  Marks & Clerk France
  Conseils en Propriété Industrielle
  Immeuble Visium
  22, Avenue Aristide Briand
  94117 Arcueil Cedex (FR)**

(56) Documents cités:
**WO-A1-2005/028243     JP-A- 2007 210 576
US-A- 4 785 899**

**Description**

L'invention concerne une roue sphérique destinée à mouvoir un véhicule et à un véhicule mettant en oeuvre la roue.

De façon classique les véhicules à quatre roues sont équipés de roues directionnelles leur permettant de changer de direction. Les roues sont reliées au véhicule au moyen de liaisons pivot et dans le cas de roues directionnelles, un degré de liberté supplémentaire en rotation est ajouté. Lorsque les roues directionnelles sont motrices, des joints de cardan permettent d'entrainer les roues tout en permettant de modifier l'orientation de l'axe de la liaison pivot. Ce type de configuration ne permet pas de réaliser des rayons de braquage faible. En d'autres termes, il est impossible de faire pivoter le véhicule sur place sans vitesse.

Par ailleurs, on a tenté de réaliser un véhicule possédant des roues sphériques pouvant chacune pivoter sur elle-même. Un exemple d'une telle réalisation est décrit dans la demande de brevet publiée sous le numéro JP 2007-210576. Ce document décrit une roue comprenant deux hémisphères. La roue est actionnée par un arbre moteur horizontal qui entraine en rotation un support portant les deux hémisphères. Ces derniers sont montés sur le support chacun par l'intermédiaire d'une liaison pivot. Les deux liaisons pivots sont alignées. Leur axe commun est perpendiculaire à l'axe de rotation de l'arbre moteur. Un véhicule, tel qu'un robot peut être équipé de quatre roues telle que décrite dans le document JP 2007-210576. On dispose alors les axes des arbres moteurs de quatre roues perpendiculairement les uns aux autres. Les roues se trouvent alors alignées par paires. L'entrainement de deux roues d'une première paire permet de mouvoir le véhicule dans une direction perpendiculaire à l'axe commun de cette paire de roues. Pour la seconde paire de roues, les hémisphères tournent librement autour de leur liaison pivot. Un mouvement du robot dans une direction perpendiculaire est obtenu en entrainant les roues de la seconde paire. Des mouvements combinés sont bien entendus possibles. Ceci permet au véhicule de se déplacer dans n'importe quelle direction et même de tourner sur lui-même.

Cette réalisation présente un inconvénient. En effet, l'arbre moteur d'une roue pénètre dans la roue par un plan équatorial de la roue, situé entre les deux hémisphères. On définit le plan équatorial par analogie à la sphère terrestre. Ce plan sépare les deux hémisphères que l'on peut assimiler aux hémisphères terrestres nord et sud. L'arbre moteur doit posséder une certaine rigidité ce qui lui impose un diamètre minimum. Les deux hémisphères sont donc distants d'au moins ce diamètre. En pratique, il faut ajouter au diamètre de l'arbre un jeu fonctionnel évitant que les hémisphères ne frottent contre l'arbre moteur. On obtient donc deux hémisphères limités chacun par un plan. Les plans des deux hémisphères sont parallèles et disposés à une distance que l'on ne peut réduire pas sans risque de nuire à la rigidité de l'arbre moteur.

Lorsque le plan équatorial de la roue est en position vertical par rapport au sol, que l'on suppose horizontal, une discontinuité de l'appui de la roue sur le sol apparait. Plus précisément, Lorsque la roue est motrice, le plan équatorial de la roue vient à chaque tour de roue en contact avec le sol et entraine un passage de l'appui sur le sol d'un hémisphère à l'autre et donc d'un plan d'un hémisphère à l'autre. Lors du passage par cette discontinuité, une perte d'adhérence peut se produire, la sphéricité de la roue est momentanément perdue et à grande vitesse un bruit intervient à chaque passage.

L'invention vise à réaliser une roue sphérique dans laquelle les inconvénients de la discontinuité sont réduits. Autrement dit, l'invention vise à permettre l'utilisation d'un arbre moteur de diamètre plus important sans augmenter la discontinuité.

A cet effet, l'invention a pour objet une roue sphérique destinée à mouvoir un véhicule, la roue étant motorisée en rotation par un arbre pouvant tourner autour d'un axe, caractérisée en ce qu'elle comprend deux calottes dont la surface suit la surface sphérique de la roue et limitées chacune par un plan, en ce que les calottes sont articulées chacune au moyen d'une liaison pivot par rapport à l'arbre, un axe de chacune des liaisons pivot étant perpendiculaire au plan de la calotte considérée, et en ce que les plans limitant les deux calottes sont sécants.

Autrement dit, les axes des deux liaisons pivot ne sont pas alignés.

L'invention a également pour objet un véhicule comprenant au moins trois roues selon l'invention. Les axes des arbres d'au moins deux roues ne sont pas alignés.

L'invention sera mieux comprise et d'autres avantages apparaîtront à la lecture de la description détaillée d'un mode de réalisation donné à titre d'exemple, description illustrée par le dessin joint dans lequel :

les figures 1 et 2 représentent une roue sphérique mettant en oeuvre le principe de l'invention ;
les figures 3 et 4 représentent des courbes montrant l'optimisation d'un angle d'ouverture de calottes appartenant à une roue selon l'invention ;
les figures 5 et 6 représentent une première variante de réalisation de la roue ;
les figures 7 et 8 représentent une seconde variante de réalisation de la roue ;
les figures 9, 10 et 11 représentent plusieurs formes de surface de la roue ;
la figure 12 représente un exemple de véhicule équipée de plusieurs roues.

Par souci de clarté, les mêmes éléments porteront les mêmes repères dans les différentes figures.

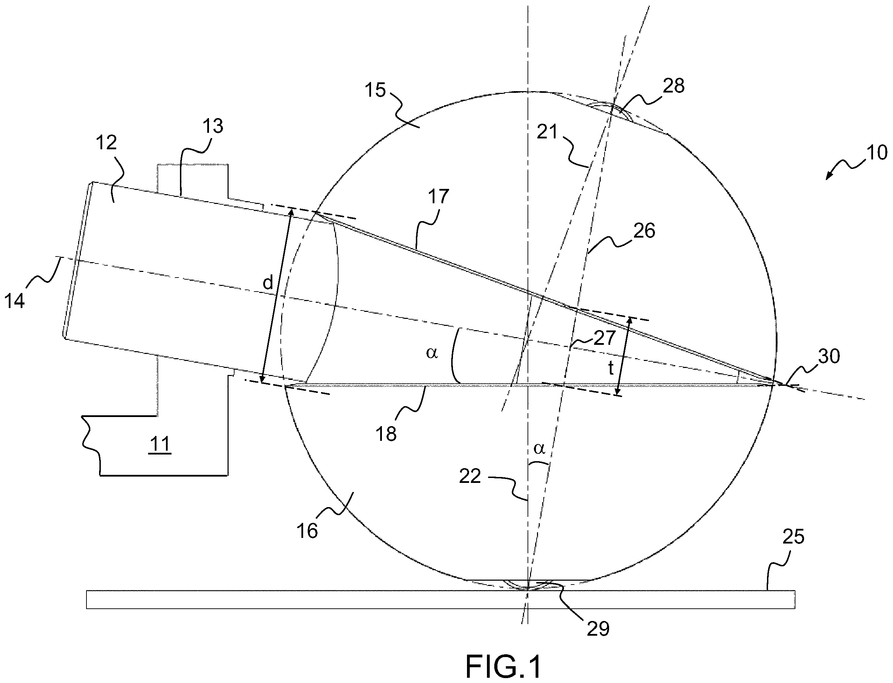

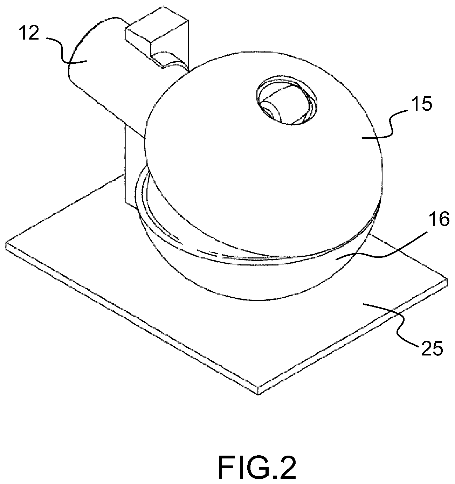

Les figures 1 et 2 représentent une roue sphérique 10 destinée à mouvoir un véhicule 11. La figure 1 est représentée de profil et la figure 2 en perspective. La roue 10 est motorisée en rotation par un arbre 12. Le véhicule 11 est représenté par sa caisse et l'arbre 12 est lié à la caisse par une liaison pivot 13. L'axe de rotation de l'arbre 12 porte le repère 14.

Selon l'invention, la roue 10 comprend deux calottes 15 et 16 dont la surface suit la surface sphérique de la roue 10. La calotte 15 est limitée par un plan 17 et la calotte 16 est limitée par un plan 18. Les calottes 15 et 16 sont articulées chacune au moyen d'une liaison pivot, respectivement 19 et 20 par rapport à l'arbre 12. L'axe 21 de la liaison pivot 19 est perpendiculaire au plan 17 de la calotte 15 et l'axe 22 de la liaison pivot 20 est perpendiculaire au plan 18 de la calotte 16. Les deux liaisons pivot 19 et 20 sont disposées à l'intérieur de leur calotte respective et seront détaillées plus loin.

Il est possible de réaliser des calottes 15 et 16 différentes, mais avantageusement, celle-ci sont identiques et disposées symétriquement par rapport à l'arbre 12. Autrement dit, les plans 17 et 18 sont sécants selon une droite possédant un point d'intersection 30 avec l'axe 14 de l'arbre 12. Dans cette configuration, les axes 21 et 22 des deux liaisons pivot 19 et 20 sont sécants et forment un angle non nul entre eux.

La roue 10 est destinée à rouler sur le sol repéré 25 sur les figures 1 et 2. Une des deux calottes 15 ou 16 est en contact avec le sol 25. Lorsque l'arbre 12 entraine la roue 10, celle-ci maintient un contact avec le sol 25 selon un cercle 26 de la surface sphérique de la roue 10. Dans ce mouvement, le véhicule possède un vecteur vitesse perpendiculaire à l'axe 14 au point d'intersection 27 entre l'axe 14 et un plan contenant le cercle 26. Lorsque le vecteur vitesse du véhicule 11, appliqué au point 26 n'est pas perpendiculaire à l'axe 14, la calotte qui est en contact avec le sol se met à tourner librement autour de sa liaison pivot.

Autrement dit, la calotte en contact avec le sol peut être animée de deux mouvements : une première rotation motrice autour de l'axe 14 et une seconde rotation atour de l'axe de sa liaison pivot. Les deux rotations peuvent bien entendu se combiner en fonction de la direction du vecteur vitesse du véhicule au point 26.

Dans le fonctionnement de la roue10 une singularité apparait lorsque la calotte en contact avec le sol 25, la calotte 16 sur la figure 1, a son plan 18 horizontal. Dans cette configuration, si le véhicule possède un vecteur appliqué au point 27 non perpendiculaire à l'axe 14, alors la calotte 16 ne peut pas tourner autour de sa liaison pivot 20 et glisse sur le sol 25. Pour éviter ce glissement, chaque calotte 15 et 16 comprend une roulette disposée dans le prolongement de la liaison pivot de la calotte considérée et assurant un roulement au niveau de la surface sphérique. Plus précisément, la calotte 15 est équipée d'une roulette 28 et la calotte 16 d'une roulette 29. Les roulettes 28 et 29 peuvent posséder un seul degré de liberté en rotation autour d'un axe perpendiculaire à l'axe 14. Ce mouvement de rotation suffit pour éviter le glissement de la roue dans une configuration de singularité. Les roulettes possèdent chacune une ligne de roulement qui suit la surface sphérique de la roue 10.

Il est également possible de donner à chaque roulette 28 et 29 deux degrés de libertés en rotation autour d'un point situé sur l'axe de la liaison pivot correspondante. La roulette possède toujours un point de sa surface de roulement situé dans le prolongement de la liaison pivot considéré et aligné avec la surface sphérique de la roue 10. Cette roulette, que l'on peut assimiler à une bille folle, dans un logement est plus facile à positionner qu'une roulette à un degré de liberté.

On a vu précédemment que lors de la rotation de la roue 10, le contact sur le sol 25 se fait sur un point du cercle 26 dont le plan qui le contient est perpendiculaire à l'axe 14. Par ailleurs, dans l'exemple où les plans 17 et 18 sont sécants selon une droite possédant un point d'intersection 30 avec l'axe 14 de l'arbre 12, on peut définir une distance y entre les plans 17 et 18 au niveau du cercle 26 et une distance d séparant les plans 17 et 18 au niveau de l'intersection des plans 17 et 18 avec la surface sphérique, intersection la plus éloignée du point 30. Cette distance d représente le plus grand diamètre possible pour l'arbre 12. Dans la pratique pour éviter tout frottement entre l'arbre 12 et les calottes 15 et 16, on prévoit un jeu fonctionnel entre l'arbre 12 et les calottes 15 et 16. Par la suite, pour simplifier l'explication, on assimilera la distance d au diamètre de l'arbre 12. On constate que le fait de choisir une disposition des plans 17 et 18 sécante permet pour une distance y donnée d'augmenter le diamètre d de l'arbre 12, ce qui permet d'augmenter la rigidité de l'arbre, ou encore pour un diamètre d donné, on réduit la distance y formant une discontinuité dans le roulement de la roue 10. Il s'agit de la même discontinuité que celle décrite pour l'art antérieur.

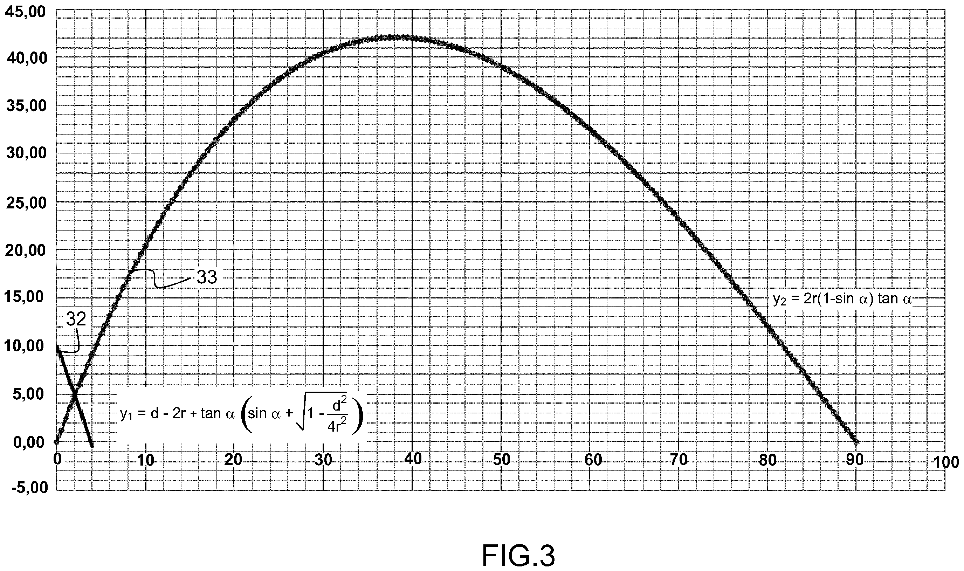

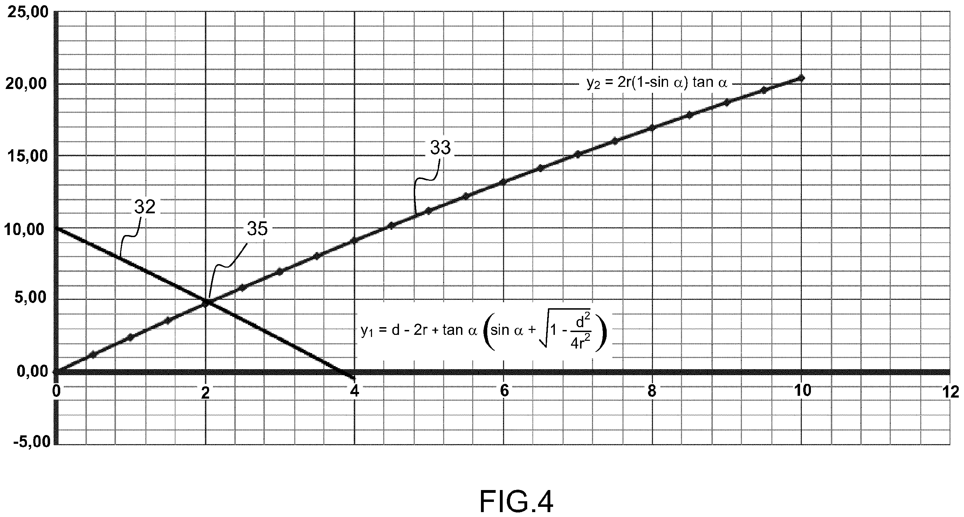

Les figures 3 et 4 représentent des courbes d'optimisation d'un angle formé entre les deux plans 17 et 18. On définit un angle $\alpha$ d'inclinaison de l'axe 14 par rapport au plan du sol 25 considéré comme une surface horizontale. Cet angle $\alpha$ se retrouve entre le cercle 26 et un rayon de la sphère perpendiculaire au plan du sol 26, c'est-à-dire un rayon vertical.

Dans l'exemple représenté, on prend comme hypothèse que le plan 18 peut prendre une position parallèle au sol 25 représenté ici horizontalement, comme représenté sur la figure 1. En conséquence, l'axe 22 de la liaison pivot 20 appartenant à la calotte 16 est, dans la configuration de la figure 1, un rayon vertical de la sphère. L'angle d'ouverture des deux plans 17 et 18 vaut alors 2a. Cette hypothèse n'est pas obligatoire pour mettre en oeuvre l'invention. Elle limite néanmoins le glissement au niveau de la singularité traité par les roulettes.

Les deux courbes donne la valeur de la distance y. Une première courbe 32 représente l'évolution de la distance

notée $y_1$ en fonction de la position du point d'intersection 30. Des paramètres de ce calcul sont l'angle a, le rayon r de la sphère et la distance d. La courbe débute pour un point d'intersection situé à l'infini, c'est-à-dire selon l'art antérieur.

L'équation générale donne :

$$y_1 = d - 2r + \tan\alpha\left(\sin\alpha + \sqrt{1 - \frac{d^2}{4r^2}}\right) \qquad (1)$$

On a donné comme valeurs numériques : d = 10mm et r = 70mm. On constate que la distance $y_1$ décroit lorsque le point d'intersection 30 se rapproche de la roue 10.

Une seconde courbe 33 représente l'évolution de la distance notée $y_2$ en fonction de l'angle d'ouverture des deux plans 17 et 18 lorsque le point d'intersection 30 est situé à la surface de la sphère.

L'équation générale donne :

$$y_2 = 2r(1 - \sin\alpha)\tan\alpha \qquad (2)$$

On conserve les mêmes valeurs numériques : d = 10mm et r = 70mm. Les deux courbes 32 et 33 sont représentées dans le même repère. La figure 2 montre les deux courbes 32 et 33 en fonction d'un angle a variant de 0 à 90°. Les anglesa de grandes valeurs ne présentent que peu d'intérêt. En effet, il parait difficile de motoriser un véhicule lorsque les axes 14 de ses roues sont trop inclinés. On s'intéresse essentiellement à des valeurs d'angle a inférieures à 10° Cette partie des courbes 32 et 33 est représentée en vue agrandie sur la figure 4.

Les deux courbes 32 et 33 ont un point d'intersection 35 qui, pour les valeurs numériques choisies, donne un angle $\alpha$ de 2° et une valeur de distance y de 4,84mm. Dans la pratique, la partie de la première courbe 32 s'étendant au-delà du point d'intersection 35 n'est pas réalisable car le point 30 serait à l'intérieur de la sphère. De même la partie de la seconde courbe 33 s'étendant en deçà du point d'intersection 35 n'est pas réalisable car les calottes 15 et 16 interféreraient avec l'arbre 12. En conséquence, la meilleure valeur se situe au point d'intersection 35. Cette valeur est théorique. Il faut prévoir des jeux fonctionnels d'une part entre les calottes 15 et 16 au voisinage du point 30, et d'autre part entre les calottes et l'arbre 12 au niveau de la distance d.

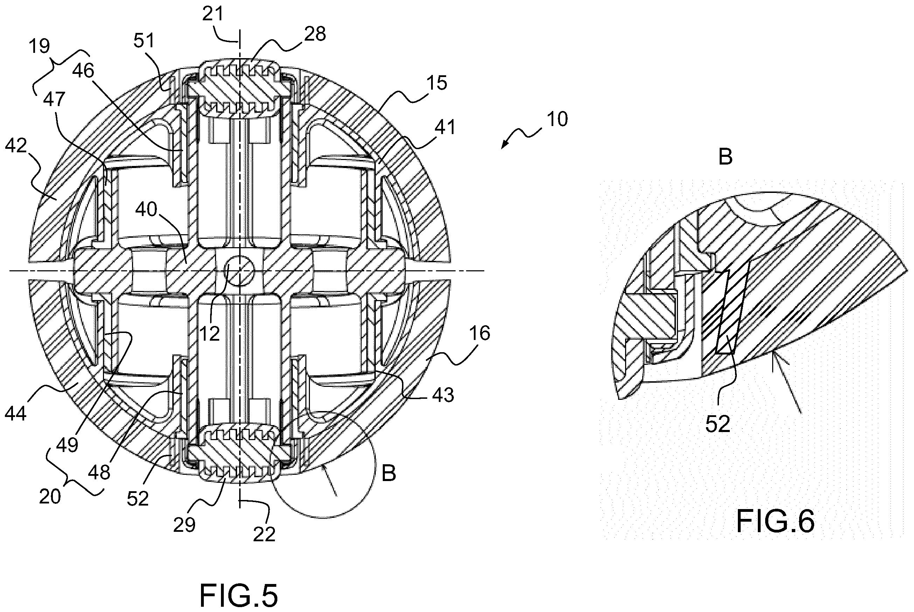

La figure 5 représente un exemple de réalisation de la roue 10 en coupe brisée contenant d'une part pour la calotte 15, l'axe 21 de la liaison pivot 19 et l'axe de la roulette 28 et d'autre part pour la calotte 16, l'axe 22 de la liaison pivot 20 et l'axe de la roulette 29.

La roue 10 comprend un support 40 solidaire de l'arbre 12. La calotte 15 comprend une structure porteuse rigide 41 et une couche de matériau souple 42. De même, la calotte 16 comprend une structure porteuse rigide 43 et une couche de matériau souple 44. Les couches de matériau souple 42 et 44 possèdent des caractéristiques choisies pour permettre l'adhérence sur un sol 25 sur lequel la roue est destinée à rouler. Les couches 42 et 44 forment la surface sphérique des calottes 15 et 16. Les couches 42 et 44 sont par exemple réalisées en caoutchouc ou en silicone.

La liaison pivot 19 relie le support 40 et la structure porteuse rigide 41. La liaison pivot 20 relie le support 40 et la structure porteuse rigide 43. Dans l'exemple représenté, chacune des liaisons pivot 19 et 20 est formée de deux paliers : d'une part 46 et 47 pour la liaison 19 et d'autre part 48 et 49 pour la liaison 20. Il est bien entendu possible de mettre en oeuvre un autre nombre de paliers par calotte en fonction de la rigidité recherchée pour la roue 10. Dans ce mode de réalisation, les paliers sont formés au moyen d'une entretoise s'interposant entre le support 40 et la structure porteuse correspondante. L'entretoise est par exemple réalisée dans un matériau permettant d'obtenir un faible coefficient de frottement. On peut par exemple utilise du polytétrafluoroéthylène. D'autres modes de réalisation des paliers sont possibles. On peut par exemple utiliser des paliers à roulements pour limiter le couple résistant dans la rotation des liaisons pivot 19 et 20.

Pour chaque calotte 15 et 16, la couche de matériau souple correspondante est interrompue pour permettre le passage de la roulette. Avantageusement, chaque calotte comprend un anneau de contention configuré pour limiter le fluage de la couche au niveau de son interruption. Le fluage de la couche de matériau souple intervient notamment avec la pression de la roue 10 sur le sol 25 du fait du poids du véhicule 11. Le fait de limiter le fluage autour de la roulette permet de réduire les dimensions de l'interruption sans risquer un frottement entre la roulette et la couche de matériau souple. Un tel frottement risquerait d'empêcher la rotation de la calotte autour de sa liaison pivot. On peut ainsi rapprocher le bord de la couche de matériau souple de la roulette et ainsi limiter la discontinuité dans l'appui de la roue 10 sur le sol 25 au niveau du passage d'un appui entre la couche de matériau souple et la roulette.

Pour la calotte 15 l'anneau de contention comprend par exemple une nervure 51 réalisée dans la structure porteuse 41 et entourant la roulette 28. De même, pour la calotte 16 une nervure 52 réalisée dans la structure porteuse 43 entoure la roulette 29. La figure 6 représente en vue partielle agrandie la roue 10 au niveau de la nervure 52. Il est possible de réaliser les structures porteuses 41 et 43 par moulage, les nervures 51 et 52 étant moulées avec les structures porteuses. Les anneaux de contention 51 et 52 peuvent être de forme cylindrique autour de l'axe de la liaison pivot respective, comme représenté sur la figure 5. Mais avantageusement, les anneaux de contentions 51 et 52 sont de forme tronconique autour de l'axe de la liaison pivot respective, la forme tronconique se refermant en se rapprochant de la surface sphérique de la calotte correspondante, comme représenté sur la figure 6. Cela permet de réduire encore les dimensions de l'interruption, c'est-à-dire de limiter encore plus la distance entre le bord de la couche de matériau souple et la roulette. L'anneau de contention ne gêne pas le montage de la roulette qui peut être réalisé par l'intérieur de la calotte.

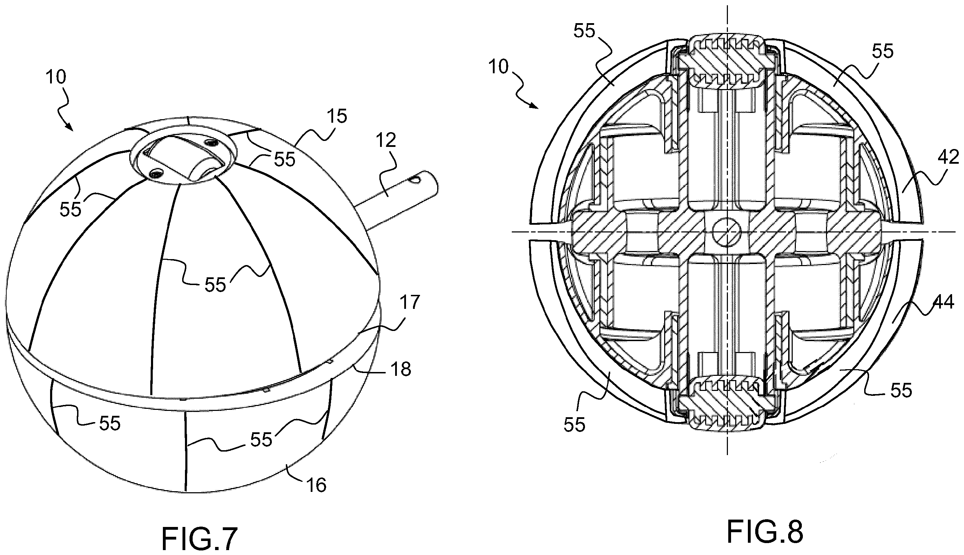

Avantageusement, chaque calotte 15 et 16 comprend une ou plusieurs nervures rigides 55 disposées dans la couche de matériau souple et configurée pour faire évoluer la souplesse de la couche en fonction d'une distance au plan de la calotte considérée. Les nervures 55 sont avantageusement réalisées dans la structure porteuse de la calotte considérée. Les figures 7 et 8 représentent un exemple de mise en place des nervures 55. La figure 7 représente la roue 10 en perspective et la figure 8 représente la roue 10 en coupe de façon semblable à la figure 5. La figure 7 représente un exemple de répartition des nervures 55 sur chacune de calottes 15 et 16. Les nervures 55 sont réparties à la façon de méridiens sur la surface terrestre en plaçant la roulette au pôle, les plans 17 et 18 représentant des parallèles de la surface terrestre. Sur la figure 7 huit nervures 55 ont été disposées sur chacune des calottes 15 et 16. D'autres nombres de rainures sont bien entendu possibles. Sur la figure 8, les nervures 55 apparaissent de profil. Au voisinage de la roulette les nervures 55 ont une hauteur sensiblement égale à l'épaisseur de la couche de matériau souple 42 ou 44. On peut prévoir un léger recouvrement de la nervure 55 par la couche de matériau souple afin de conserver la même adhérence de la roue 10, lorsque le contact au sol se fait au niveau d'une nervure ou entre deux nervures 55. Au voisinage du plan limitant la calotte, plan 17 pour la calotte 15 et plan 18 pour la calotte 16, les nervures 55 ont une hauteur très faible voire nulle au regard de l'épaisseur de la couche de matériau souple. Cette évolution de la hauteur des nervures 55 permet d'adapter la souplesse de la couche de matériau souple.

Il est possible de réaliser une roue 10 possédant à la fois les anneaux de contention et les nervures 55.

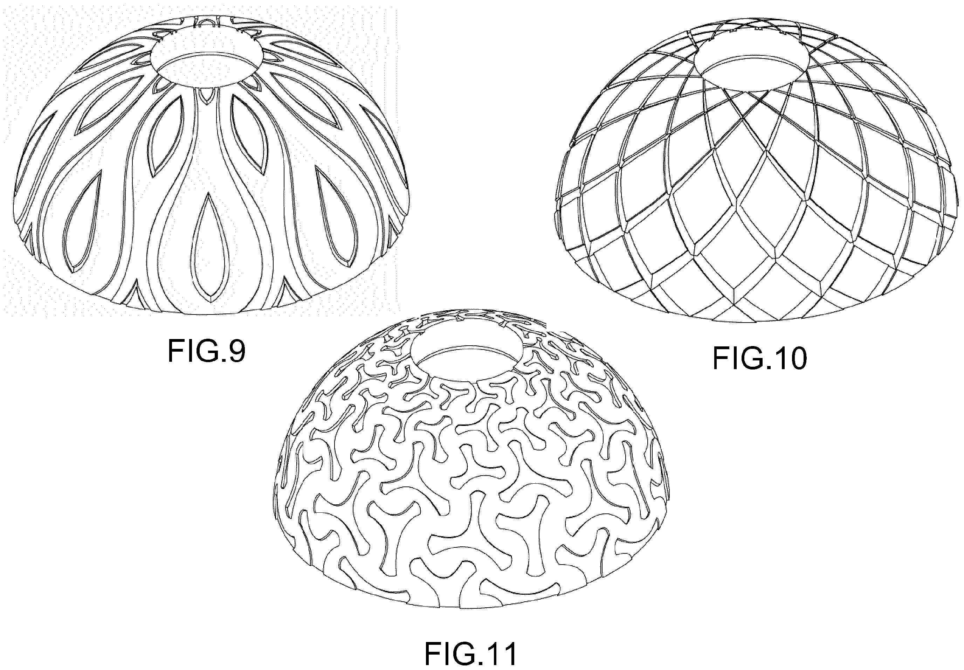

Avantageusement, la couche de matériau souple est rainurée afin d'améliorer l'adhérence de la roue 10 sur le sol 25. Plusieurs exemples de dispositions de rainures sont représentés sur les figures 9 à 11. Ces rainures permettent un meilleur accrochage sur différents types de sol. L'invention est avantageusement mise en oeuvre pour un robot pouvant être utilisé en intérieur. Les rainures forment des sculptures améliorant la polyvalence du robot pour des sols de type moquette, marbre, parquet, béton, tapis, etc... Les rainures comprennent des arrêtes vives s'étendant dans toutes les directions. En effet, contrairement à des roues connues qui ne possèdent qu'une seule liaison pivot, une roue sphérique selon l'invention peut tourner selon deux degrés de liberté en rotation autour du centre de sa surface sphérique. Il est donc avantageux de ne privilégier aucune direction dans le dessin des rainures.

Avantageusement, une densité surfacique de rainures augmente en s'éloignant du plan 17 ou 18 de la calotte considérée 15 ou 16. Cette augmentation de densité est bien visible sur les figures 9 à 11. Les rainures sont plus rapprochées au voisinage de l'interruption de la couche de matériau souple pour le passage de la roulette correspondante qu'au voisinage du plan 17 ou 18. Cette disposition permet d'améliorer la garantie d'une transition sans glissement entre la couche de matériau souple et la roulette. On limite ainsi le risque de frottement de la roue entre la couche de matériau souple et le sol au voisinage de la transition. Un tel frottement ne permettrait pas ou retarderait le passage d'un contact de la roue sur une de ses roulettes.

Les rainures permettent également de drainer de l'eau lorsque la roue 10 est utilisée sur sol mouillé.

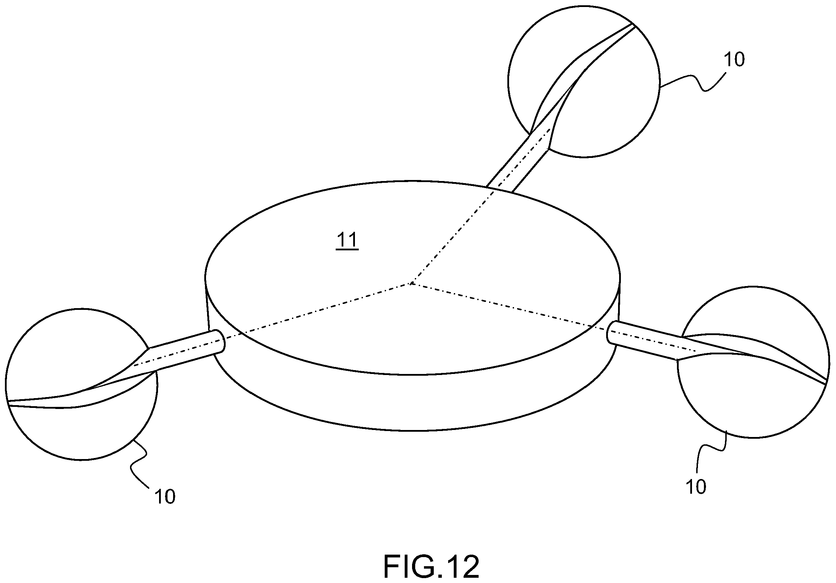

La figure 12 représente un véhicule 11 équipé de trois roues 10 selon l'invention. Ce véhicule est par exemple un robot. On peut également mettre en oeuvre l'invention pour des véhicules comprenant plus de trois roues. Par exemple pour un véhicule à quatre roues, les axes de roues opposées sont situés dans un même plan vertical par rapport à un sol horizontal, formant ainsi deux paires de roues. Les plans contenant les axes des deux paires de roues sont perpendiculaires. De façon plus générale, les axes des arbres d'au moins deux roues ne sont pas disposés dans un même plan, ce qui permet au véhicule de se mouvoir dans toutes les directions en conservant ses roues 10 sur le sol 25 au moyen d'un pilotage adapté.

**Revendications**

1. Roue sphérique destinée à mouvoir un véhicule (11), la roue (10) étant motorisée en rotation par un arbre (12) pouvant tourner autour d'un axe (14), **caractérisée en ce qu'**elle comprend deux calottes (15, 16) dont la surface suit la surface sphérique de la roue (10) et limitées chacune par un plan (17, 18), **en ce que** les calottes (15, 16) sont articulées chacune au moyen d'une liaison pivot (19, 20) par rapport à l'arbre (12), un axe (21, 22) de chacune des liaisons pivot (19, 20) étant perpendiculaire au plan (17, 18) de la calotte (15, 16) considérée, et **en ce que** les plans (17, 18) limitant les deux calottes (15, 16) sont sécants.

**2.** Roue selon la revendication 1, **caractérisée en ce que** les plans (17, 18) limitant les deux calottes (15, 16) sont sécants selon une droite possédant un point d'intersection (30) avec l'axe (14) de l'arbre (12).

**3.** Roue selon l'une des revendications précédentes, **caractérisée en ce que** chaque calotte (15, 16) comprend une roulette (28, 29) disposée dans le prolongement de la liaison pivot (19, 20) de la calotte (15, 16) considérée et assurant un roulement au niveau de la surface sphérique.

**4.** Roue selon l'une des revendications précédentes, **caractérisée en ce que** chaque calotte (15, 16) comprend une structure porteuse rigide (41, 43) et une couche de matériau souple (42, 44) dont les caractéristiques sont choisies pour permettre l'adhérence sur un sol (25) sur lequel la roue (10) est destinée à rouler, la couche de matériau souple (42, 44) formant la surface sphérique de la calotte (15, 16).

**5.** Roue selon les revendications 3 et 4, **caractérisée en ce que** dans chaque calotte (15, 16), la couche de matériau souple (42, 44) est interrompue pour permettre le passage de la roulette (28, 29) et **en ce que** chaque calotte (15, 16) comprend un anneau de contention (51, 52) configuré pour limiter le fluage de la couche de matériau souple (42, 44) au niveau de son interruption pour permettre le passage de la roulette (28, 29).

**6.** Roue selon la revendication 5, **caractérisée en ce que** l'anneau de contention (51, 52) est de forme tronconique autour de l'axe de la liaison pivot correspondante, la forme tronconique se refermant en se rapprochant de la surface sphérique de la calotte (15, 16) correspondante,

**7.** Roue selon l'une quelconque des revendications 4 à 6, **caractérisée en ce que** chaque calotte (15, 16) comprend une ou plusieurs nervures rigides (55) disposées dans la couche de matériau souple (42, 44) et configurée pour faire évoluer la souplesse de la couche de matériau souple (42, 44) en fonction d'une distance au plan (17, 18) de la calotte (15, 16) considérée.

**8.** Roue selon l'une quelconque des revendications 4 à 7, **caractérisée en ce que** la couche de matériau souple (42, 44) est rainurée afin d'améliorer l'adhérence de la roue (10).

**9.** Roue selon la revendication 8, **caractérisée en ce qu'**une densité surfacique de rainures augmente en s'éloignant du plan (17, 18) de la calotte (15, 16) considérée.

**10.** Véhicule **caractérisé en ce qu'**il comprend au moins trois roues (10) selon l'une des revendications précédentes et **en ce que** les axes (14) des arbres (12) d'au moins deux roues (10) ne sont pas disposés dans un même plan.

**Patentansprüche**

**1.** Kugelförmiges Rad, das vorgesehen ist, um ein Fahrzeug (11) zu bewegen, wobei das Rad (10) durch eine Welle (12) drehbar angetrieben wird, die um eine Achse (14) drehen kann, **dadurch gekennzeichnet, dass** es zwei Kappen (15, 16) umfasst, deren Oberfläche der Kugeloberfläche des Rads (10) folgt und jede durch eine Ebene (17, 18) beschränkt wird, dass die Kappen (15, 16) jeweils mittels einer Drehverbindung (19, 20) bezüglich der Welle (12) gelenkig sind, wobei eine Achse (21, 22) jeder der Drehverbindungen (19, 20) senkrecht zur Ebene (17, 18) der betrachteten Kappe (15, 16) ist, und dass sich die Ebenen (17, 18), die die zwei Kappen (15, 16) begrenzen, schneiden.

**2.** Rad nach Anspruch 1, **dadurch gekennzeichnet, dass** die Ebenen (17, 18), die die die zwei Kappen (15, 16) begrenzen, sich gemäß einer Geraden schneiden, die einen Schnittpunkt (30) mit der Achse (14) der Welle (12) besitzt.

**3.** Rad nach einem der vorhergehenden Ansprüche, **dadurch gekennzeichnet, dass** jede Kappe (15, 16) eine in der Verlängerung der Drehverbindung (19, 20) der betrachteten Kappe (15, 16) angeordnete Rolle (28, 29) umfasst und eine Rollbahn in Bezug auf die Kugeloberfläche sicherstellt.

**4.** Rad nach einem der vorhergehenden Ansprüche, **dadurch gekennzeichnet, dass** jede Kappe (15, 16) eine starre Tragkonstruktion (41, 43) und eine weiche Materialschicht (42, 44) umfasst, deren Eigenschaften gewählt werden, um die Hafteigenschaft auf einem Boden (25) zu erlauben, auf dem das Rad (10) rollen soll, wobei die weiche Materialschicht (42, 44) die Kugeloberfläche der Kappe (15, 16) bildet.

**5.** Rad nach den Ansprüchen 3 und 4, **dadurch gekennzeichnet, dass** in jeder Kappe (15, 16) die weiche Materialschicht (42, 44) unterbrochen ist, um den Durchtritt der Rolle (28, 29) zu erlauben, und dass jede Kappe (15, 16) einen Sicherungsring (51, 52) umfasst, der konfiguriert wird, um das Kriechen der weichen Materialschicht (42, 44) an ihrer Unterbrechung zu begrenzen, um den Durchtritt der Rolle (28, 29) zu erlauben.

**6.** Rad nach Anspruch 5, **dadurch gekennzeichnet, dass** der Sicherungsring (51, 52) um die Achse der entsprechenden Drehverbindung von kegelstumpfförmiger Form ist, wobei die kegelstumpfförmige Form sich beim Annähern an die Kugeloberfläche der entsprechenden Kappe (15, 16) wieder schließt.

**7.** Rad nach einem der Ansprüche 4 bis 6, **dadurch gekennzeichnet, dass** jede Kappe (15, 16) eine oder mehrere starre Rippen (55) umfasst, die in der weichen Materialschicht (42, 44) angeordnet und konfiguriert sind, um die Nachgiebigkeit der weichen Materialschicht (42, 44) abhängig vom Abstand der betrachteten Kappe (15, 16) zur Ebene (17, 18) zu entwickeln.

**8.** Rad nach einem der Ansprüche 4 bis 7, **dadurch gekennzeichnet, dass** die weiche Materialschicht (42, 44) gerillt ist, um die Hafteigenschaft des Rads (10) zu verbessern.

**9.** Rad nach Anspruch 8, **dadurch gekennzeichnet, dass** eine Oberflächendichte der Rillen sich mit zunehmendem Abstand von der Ebene (17, 18) der betrachteten Kappe (15, 16) erhöht.

**10.** Fahrzeug, **dadurch gekennzeichnet, dass** es mindestens drei Räder (10) nach einem der vorhergehenden Ansprüche umfasst und dass die Achsen (14) der Wellen (12) von mindestens zwei Rädern (10) nicht in einer selben Ebene angeordnet sind.

**Claims**

**1.** A spherical wheel intended to move a vehicle (11), the wheel (10) having its rotation motorized by a shaft (12) able to rotate about an axis (14), **characterized in that** it comprises two shells (15, 16), the surface of which follows the spherical surface of the wheel (10) and each of which is bounded by a plane (17, 18), **in that** the shells (15, 16) are each articulated by means of a pivot connection (19, 20) with respect to the shaft (12), an axis (21, 22) of each of the pivot connections (19, 20) being perpendicular to the plane (17, 18) of the relevant shell (15, 16), and **in that** the planes (17, 18) bounding the two shells (15, 16) are secant.

**2.** The wheel as claimed in claim 1, **characterized in that** the planes (17, 18) bounding the two shells (15, 16) are secant along a straight line that has a point of intersection (30) with the axis (14) of the shaft (12).

**3.** The wheel as claimed in one of the preceding claims, **characterized in that** each shell (15, 16) comprises a roller (28, 29) positioned in the continuation of the pivot connection (19, 20) of the relevant shell (15, 16) and allowing rolling at the spherical surface.

**4.** The wheel as claimed in one of the preceding claims, **characterized in that** each shell (15, 16) comprises a rigid bearing structure (41, 43) and a layer of soft material (42, 44) the properties of which are chosen to allow grip on a ground (25) on which the wheel (10) is intended to run, the layer of soft material (42, 44) forming the spherical surface of the shell (15, 16).

**5.** The wheel as claimed in claims 3 and 4, **characterized in that** in each shell (15, 16), the layer of soft material (42, 44) is interrupted to allow the roller (28, 29) through, and **in that** each shell (15, 16) comprises a containment ring (51, 52) configured to limit the creep of the layer of soft material (42, 44) in the region where it is interrupted in order to allow the roller (28, 29) through.

**6.** The wheel as claimed in claim 5, **characterized in that** the containment ring (51, 52) is of frustoconical shape about the axis of the corresponding pivot connection, the frustoconical shape tapering in the direction toward the spherical surface of the relevant shell (15, 16).

**7.** The wheel as claimed in any one of claims 4 to 6, **characterized in that** each shell (15, 16) comprises one or more rigid ribs (55) arranged in the layer of soft material (42, 44) and configured to cause the flexibility of the layer of soft material (42, 44) to evolve as a function of a distance to the plane (17, 18) of the relevant shell (15, 16).

8. The wheel as claimed in any one of claims 4 to 7, **characterized in that** the layer of soft material (42, 44) is grooved in order to improve the grip of the wheel (10).

9. The wheel as claimed in claim 8, **characterized in that** a groove surface density increases with distance away from the plane (17, 18) of the relevant shell (15, 16).

10. A vehicle, **characterized in that** it comprises at least three wheels (10) as claimed in one of the preceding claims, and **in that** the axes (14) of the shafts (12) of at least two wheels (10) are not situated in one and the same plane.

FIG.1

EP 2 844 498 B1

FIG.2

$$y_1 = d - 2r + \tan \alpha \left( \sin \alpha + \sqrt{1 - \frac{d^2}{4r^2}} \right)$$

$$y_2 = 2r(1-\sin \alpha) \tan \alpha$$

FIG.3

EP 2 844 498 B1

$$y_2 = 2r(1-\sin \alpha) \tan \alpha$$

$$y_1 = d - 2r + \tan \alpha \left( \sin \alpha + \sqrt{1 - \frac{d^2}{4r^2}} \right)$$

FIG.4

EP 2 844 498 B1

EP 2 844 498 B1

**FIG.5**

**FIG.6**

FIG.8

FIG.7

FIG.10

FIG.11

FIG.9

FIG.12

EP 2 844 498 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2007210576 A